# EUROPÄISCHE PATENTSCHRIFT

(11) **EP 0 770 329 B1**
(45) Veröffentlichungstag und Bekanntmachung des Hinweises auf die Patenterteilung: **25.04.2001**
(21) Anmeldenummer: 96112268.6
(22) Anmeldetag: 30.07.1996
(51) Int. Cl.: A21C 3/02

(54) **System für Walzspalteinstellung**
System for setting a roll gap
Système de réglage d'emprise

(30) Priorität: 23.10.1995 DE 19539301
(43) Veröffentlichungstag der Anmeldung: 02.05.1997
(73) Patentinhaber: A. FRITSCH GMBH & CO. KG, D-97348 Markt Einersheim (DE)
(72) Erfinder: Bernhardt, Udo, 97346 Iphofen (DE); Hartmann, Peter, 97318 Kitzingen (DE)
(74) Vertreter: Götz, Georg, Dipl.-Ing.

(56) Entgegenhaltungen:
- US-A- 5 209 939

## Beschreibung

Die Erfindung betrifft ein Verfahren zur Walzspalteinstellung in Teigwalzmaschinen, wobei der Walzspalt mit einem Antriebsmotor verstellt wird, der entsprechend einem Vergleich von für den Walzspalt eingegebenen Sollwerten und ermittelten Istwerten angesteuert wird. Ferner betrifft die Erfindung eine Vorrichtung zur Walzspalteinstellung in Teigwalzmaschinen, wobei der Walzspalt wenigstens mit einer in einer Linearführung gelagerten Teigwalze in Gegenüberstellung zu einer sonstigen Teigauflage, beispielsweise stationäre Teigwalze oder Teigförderband, gebildet ist, und zur Walzspaltverstellung die Teigwalze in der Linearführung über Getriebemittel durch einen Antriebsmotor verschiebbar ist. Anstelle der einzelnen Teigwalze können auch umfangreichere Teig-Abrollsysteme wie Satelliten-Walzensysteme ("Satellitenkopfmaschinen" genannt) Verwendung finden.

Teigwalzmaschinen etwa dieser Art, bei denen die Walzspaltverstellung motorisch betrieben und mittels speicherprogrammierbarer Steuerungen oder Mikroprozessorsteuerungen kontrolliert ist, sind bekannt (vgl. US-A-5 209 939). Sie haben jedoch den Nachteil, daß sie verhältnismäßig teuer in der Herstellung sind und deshalb nur gelegentlich verwendet werden, wenn die Walzspalten nicht ständig verstellt werden müssen. Zur Erfassung des aktuellen Walzspaltes ist es allgemein bekannt) analoge Meßwertgeber, beispielsweise Linear-Potentiometer, zu verwenden, die in der digitalen Steuerung einen Analogeingang erforderlich machen, welcher die Kosten für die Steuerung erhöht. Dieser Nachteil wird bei bekannten Teigwalzmaschinen noch dadurch verschärft, daß als Antriebe Drehstrommotoren mit mechanischer Bremse, Schrittmotoren oder Servomotoren verwendet werden, die durch einen hohen Herstellungsaufwand und entsprechende Anschaffungskosten charakterisiert sind.

Mithin stellt sich die der Erfindung zugrundeliegende Aufgabe, das Verfahren und die Vorrichtung zur Walzspaltverstellung der eingangs genannten Art konstruktiv bzw. strukturell einfacher, insbesondere mit weniger und/oder gängigeren Bauteilen, auszubilden. Gleichzeitig soll die Funktions- und Betriebszuverlässigkeit erhöht und Anforderungen an Genauigkeit und die Anzahl der Verstellzyklen Rechnung getragen sein.

Nach einer ersten Erfindungsalternative wird zur Lösung dieser Aufgabe das im Patentanspruch 18 angebene Verfahren vorgeschlagen. Damit kann der Istwert schrittweise durch einfache Zählvorgänge stets auf aktuellem Stand gehalten werden. Derartige Operationen lassen sich leicht mit einfachen Strukturen und Registern in Mikroprozessor-Steuerungen realisieren.

Nach einer zweiten Erfindungsalternative wird die im Patentanspruch 1 angegebene bei einer Vorrichtung vorgeschlagen. Damit ist der bisher eingeschlagene, teuere Weg vermieden, Schrittmotoren oder Drehstrommotoren mit mechanischer Bremse einsetzen zu müssen. Insbesondere wenn ein Gleichstrommotor vorzugsweise mit Permanentmagneterregung eingesetzt wird, kann auf preiswerte, beispielsweise in der Kraftfahrzeug-Industrie massenhaft eingesetzte Antriebe zurückgegriffen werden. Als praktisches Realisierungsbeispiel sei auf die Gleichstrom-Getriebemotoren der Baureihe 0270 (SWMK) der Firma ITT Automotive Europe GmbH, 74307 Bietigheim-Bissingen verwiesen. Mit derartigen Motoren, insbesondere Gleichstrom-Getriebemotoren der genannten Art, lassen sich die Anforderungen an exakte und reproduzierbare Endabschaltungen mit kleinen Nachlaufwinkeln befriedigend lösen, wenn der Anker über Masse kurzgeschlossen wird und dabei sofort stoppt, wie an sich in Anwendungen in der Kraftfahrzeug-Industrie bekannt.

Um die Ansteuerung des Elektromotors einer speicherprogrammierbaren bzw. Mikroprozessor-Steuerung noch einfacher zugänglich zu machen, wird nach einer vorteilhaften Ausbildung der Erfindung vorgeschlagen, zur Erfassung des Walzspaltes einen Winkelschritt- oder Drehimpulsgeber einzusetzen, dem im Werk zur Steuerung bzw. Kontrolle ein Zählmodul zugeordnet ist, der die Schritte bzw. Impulse in Walzspalt-Istwerte weiterverarbeiten kann. Damit wird eine Kompatibilität zu dem obengenannten, erfindungsgemäßen Verfahren erreicht, das auf die Verwendung von Inkremental- bzw. Dekrementalgebern basiert.

Der Drehimpulsgeber läßt sich im Zusammenhang mit den genannten Getriebemitteln effektiv einsetzen: Wird beispielsweise die verstellbare Teigwalze von einer Gewindespindel getragen, bei der rotatorische Bewegungen einer darauf kämmenden Spindelmutter in translatorische Verstellbewegungen zur Veränderung des Teigwalzspaltes umgesetzt werden, können mit dem Drehimpulsgeber die Drehungen der Spindelmutter zuverlässig und störsicher abgetastet und in entsprechende Walzspalt-Istwerte umgerechnet werden.

In Weiterführung dieses Gedankens sind mit dem Spindeltrieb sowohl der Elektromotor zu dessen Antrieb als auch der Drehimpulsgeber zur Erfassung der dem Walzspalt entsprechenden Spindelmutterdrehungen jeweils über einen Zahnriementrieb gekoppelt. Der Vorteil besteht darin, daß das Abtriebsrad des vom Elektromotor getriebenen Zahnriementriebs gleichzeitig das einstückige Antriebsmittel für den zweiten Zahnriementrieb bilden kann, der dann beispielsweise eine zur Impulsgenerierung gerasterte Scheibe im Drehimpulsgeber antreibt. Solchenfalls ist es zweckmäßig, das Abtriebsrad des ersten Zahnriementriebs direkt mit dem Spindeltrieb, insbesondere der Spindelmutter, für die verstellbare Teigwalze in Eingriff zu bringen, indem dieses Abtriebsrad beispielsweise als Schnecke, und die Spindelmutter als darin eingreifendes Schneckenrad ausgebildet werden.

Nach einer anderen Ausbildung der erfindungsgemäßen Vorrichtung, bei der der Elektromotor von einem Kontrollwerk wie zum Beispiel einer freiprogrammierbaren oder Mikroprozessor-Steuerung betätigt wird, sind wenigstens zwei Schaltausgänge aus dem Kontrollwerk ausgebildet, mit denen Ansteuerelemente des Elektromotors oder dessen Ankers verbunden sind. Durch die mit den beiden Schaltausgängen mögliche Binärcodierung kann der Elektromotor zumindest für die folgenden drei Zustände angesteuert werden: Motoraufwärts; Motorabwärts; Motorstop durch Ankerkurzschließen.

Im Zusammenhang mit diesen drei Zuständen ist eine weitere Ausbildung der Erfindung vorteilhaft, nach der der Anker des Elektromotors Anschlußelemente besitzt, die mit wenigstens drei Schaltgliedern parallel verbunden sind, die der unterbrechbaren Verbindung mit Polaritäten oder Phasen eines externen Stromkreises für Auf- oder Abwärts-Drehrichtung des Ankers oder mit einer Kurzschlußeinrichtung für Motorstop dienen.

Zur Erhöhung der Funktions- und Betriebssicherheit ist nach einer Weiterbildung dieses Gedankens vorgesehen, daß beim Anker die Schaltglieder einerseits für die Stromkreispolaritäten oder -phasen und andererseits für die Kurzschlußeinrichtung, insbesondere Kurzschlußleitung, miteinander als Wechselschalter kombiniert sind, so daß bei geschlossenen Schaltgliedern für die Kurzschlußeinrichtung die Schaltglieder zur Verbindung mit den Stromkreispolaritäten und -phasen für Aufwärts- bzw. Abwärts-Drehrichtung stets nur den geöffneten Zustand einnehmen können.

Zur Vereinfachung des Walzspalt-Sensors und der Verarbeitung der Sensorsignale in einem Kontroll- bzw. Steuerwerk für den Elektromotor ist nach einer Ausbildung der Erfindung vorgesehen, einen Endschalter so anzuordnen, daß er bei Einnahme eines maximalen oder minimalen Walzspaltes durch die verstellbare Teigwalze betätigt wird und ein Signal an den Elektromotor oder dessen Ansteuerung abgibt. Mit diesem Signal kann sich das Steuer- oder Kontrollwerk auf einen Zählerstand eineichen, der als Referenz oder Ausgangspunkt für das weitere Inkrementieren oder Dekrementieren bzw. Aufsummieren von Drehgeber-Impulsen nützlich ist.

Die Bedienfreundlichkeit wird erhöht, wenn nach einer Ausbildung der Erfindung ein oder mehrere Handschalter, beispielsweise Drucktaster oder Eingabetastatur, vorgesehen ist, über welche der Elektromotor bzw. dessen Anker zur Einnahme eines bestimmten Walzspaltes angesteuert werden kann. Diese Einstellung kann über ein Display im Steuer- oder Kontrollwerk für den Elektromotor, auf das der jeweilige Walzspalt ausgegeben wird, überwacht werden. Ferner ist es im Rahmen der Erfindung denkbar, daß mittels Tastendruck aus einem Speichermodul im Steuer- oder Kontrollwerk unterschiedliche, vorab eingespeicherte Walzspalte abgerufen werden.

Weitere Einzelheiten, Merkmale, Vorteile und Wirkungen auf der Basis der Erfindung ergeben sich aus den Ansprüchen, der nachfolgenden Beschreibung eines bevorzugten Ausführungsbeispiels der Erfindung sowie aus den Zeichnungen. Diese zeigen in:
- Fig. 1: eine schematische Ansicht in axialer Richtung der Teigwalzen auf die Vorrichtung nach der Erfindung,
- Fig. 2: ein Grobschaltbild für die Vorrichtung und das Verfahren nach der Erfindung, und
- Fig. 3: ein Flußdiagramm für eine beispielhafte Ausführung des erfindungsgemäßen Verfahrens.

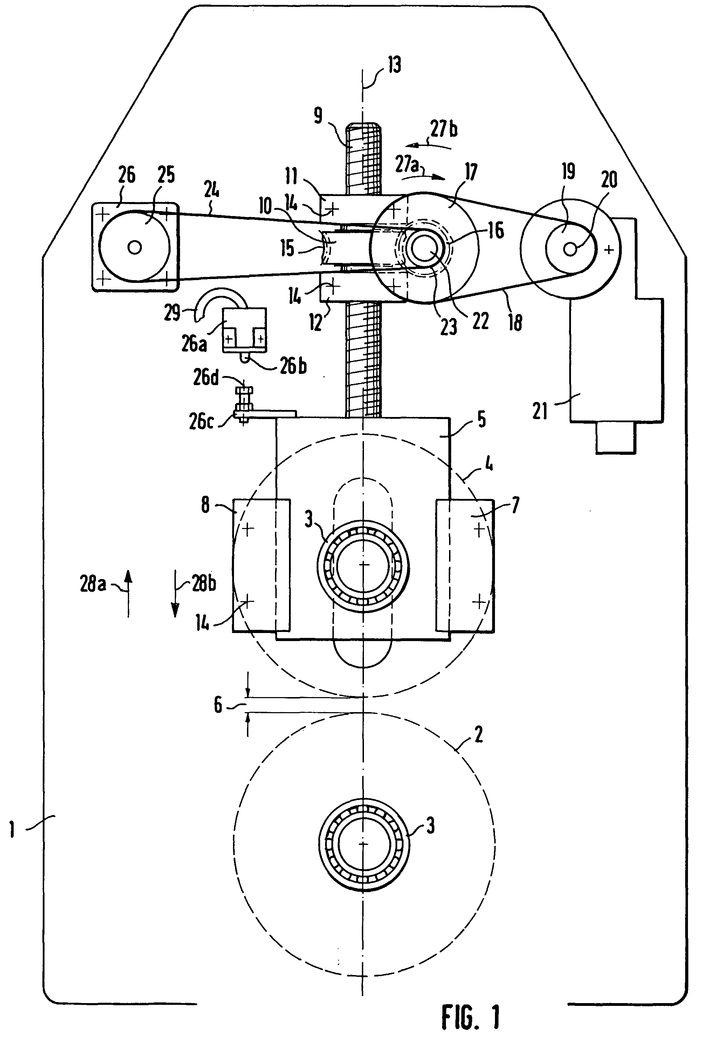

Gemäß Fig. 1 weist die Teigwalzmaschine nach der Erfindung ein Gestell 1 auf, in der eine untere Druck- bzw. Teigwalze 2 (gestrichtelt gezeichnet) über ein Kugellager 3 drehbar und im übrigen fest bzw. unverrückbar gelagert ist. Mit der unteren Teigwalze 2 bildet eine obere Teigwalze 4, die ebenfalls über ein Kugellager 3 in einer Tragplatte 5 drehbar gelagert ist, einen Walzspalt 6. Zu dessen Verstellung ist die Tragplatte 5 an ihren vertikalen Seiten in Führungselementen 7, 8 gehalten und am unteren Ende einer Gewindespindel 9 befestigt. Auf deren Außengewinde kämmt mit ihrem Innengewinde eine Spindelmutter 10, die zwischen zwei obere und untere Halteelemente 11, 12 gegenüber der Spindelachsrichtung 13 fixiert und um diese drehbar gelagert ist. Die Halteelemente sind mittels Schrauben 14 oder gleichartigen Befestigungselementen am Maschinenchassis bzw. Gestell 1 fixiert. Die Spindelmutter 10 ist an ihrem Außenumfang mit einem Außenverzahnung 15 versehen, mit welchem die komplementäre Außenverzahnung einer (mit ihrer Achse senkrecht zur Zeichenebene verlaufende) Schnecke 16 in Eingriff steht. Diese ist baulich integrierter und/oder mit dem Wellenvorsprung 22 koaxialer Bestandteil des Abtriebsrades 17 eines Riementriebs, dessen Riemen 18 das Abtriebsrad 17 und das Antriebsrad 19 umschlingt. Dieses ist auf einem Antriebs-Achsstummel 20 eines Gleichstrommotors 21 mit Kurzschlußbremse unverdrehbar aufgebracht. Der Gleichstrommotor 21 ist am Gestell 1 fixiert.

Ferner ist gemäß Fig. 1 mit dem Antriebsrad 17 neben der Schnecke 16 noch ein Wellenvorsprung 22 baulich integriert ausgebildet, auf dem ein zweites Antriebsrad 23 unverdrehbar sitzt. Dieses überträgt die vom Gleichstrommotor 21 über dem nachfolgenden Riementrieb 17, 18, 19 herrührende Drehbewegung des ersten Abtriebsrads 17 über einen weiteren Riemen 24 auf die Meßscheibe 25 eines Drehimpulsgebers 26. Mithin bilden das zweite Antriebsrad 23, der diesen umschlingende Riemen 24 und die davon umschlungene Meßscheibe 25 einen zweiten Riementrieb 23, 24, 25, deren Drehung unmittelbar von der des ersten Riementriebs 17, 18, 19 mit dem Gleichstrommotor 21 als Antriebsquelle beeinflußt ist. Geeignete Meßgeräte, die in der genannten Anordnung zu jedem Drehschritt einen entsprechenden elektrischen Impuls ausgeben können, sind an sich bekannt. Neben dem Drehimpulsgeber 26 ist noch ein Endschalter 26a in einer spezifizierten Höhe angeordnet, die nach einer maximal zulässigen Größe für den Walzspalt 6 bemessen ist. Der Endschalter 26a ist fest mit dem Gestell 1 verbunden. Aus dem Gehäuse des Endschalters 26a steht nach unten ein achsparallel vorspringender Schaltstift 26b vor, der beispielsweise gegen Federdruck längsverschiebbar ist und in das Schaltergehäuse hineinverschoben werden kann. Diesem ist ein Schaltfinger 26c als Schalt-Betätigungseinrichtung zugeordnet, der auf der Tragplatte 5 seitlich abstehend so befestigt ist, daß er mit der Achse des Schaltstiftes 26b in einer gemeinsamen Flucht 26d liegt.

Die Wirkungsweise der in Fig. 1 gezeigten Anordnung ist wie folgt: Erteilt der Gleichstrommotor je nach seiner Ansteuerung der Schnecke 16 bzw. dem Abtriebsrad 17 eine Rechtsdrehung 27a oder eine Linksdrehung 27b, gerät die wie ein Schneckenrad wirkende Spindelmutter 10 in eine entsprechende Drehung. Diese wird nach dem bekannten Spindeltriebprinzip in entsprechende, translatorische Auf- und Abbewegungen 28a, 28b für die Gewindespindel 9 und der damit fest verbundenen Tragplatte 5 nebst darin gelagerter Teigwalze 4 umgesetzt. Dies führt zu einer Vergrößerung oder Verkleinerung des Walzspaltes 6. Wird die Tragplatte 5 mit der oberen Teigwalze 4 in die maximale zulässige Höchststellung für maximal weiten Walzspalt 6 bewegt, stößt der Schaltfinger 26c gegen den Schaltstift 26b des Endschalters 26a und verschiebt diesen in das Schaltergehäuse hinein, woraufhin ein elektrisches Schaltsignal an ein Kontroll- oder Steuerwerk über die Leitung 29 übertragen wird.

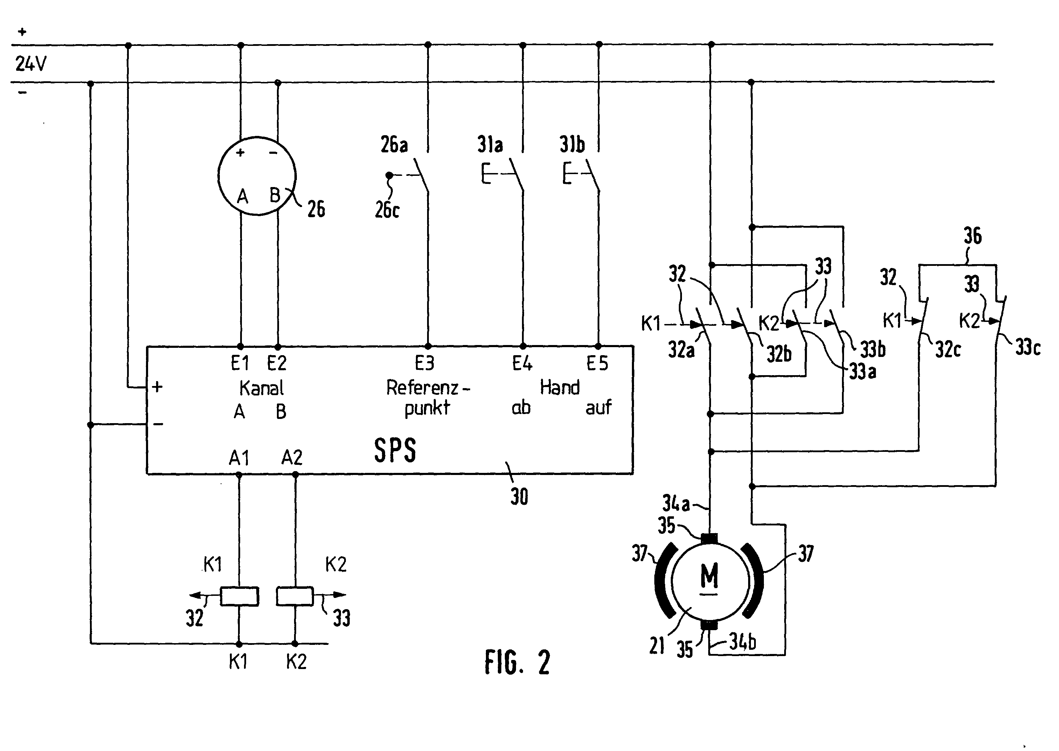

Gemäß Fig. 2 ist als Kontroll- oder Steuerwerk eine speicherprogrammierbare Steuerung 30 vorgesehen, welche Impulse pro Drehschritt der Spindelmutter 10 bzw. des damit gekoppelten zweiten Antriebsrads 23 empfängt. Gemäß Zeichnung kann der Drehimpulsgeber 26 zwei phasenverschobene Ausgänge A, B zur Angabe der Drehrichtung aufweisen, die den Eingängen E1, E2 der Steuerung 30 zugeführt sind. Der Stromversorgung dient ein externer Stromkreis mit 24 Volt Gleichspannung, der die Steuerung 30, den Drehimpulsgeber 26 und den Gleichstrommotor 21 insbesondere versorgt. Über einen weiteren Eingang E3 erhält die Steuerung 30 ein Signal vom Endschalter 26a, wenn dieser bei maximal zulässiger Walzspaltgröße durch den Schaltfinger 26c betätigt ist. Weitere Steuereingänge E4, E5 der Steuerung 30 sind für zwei Drucktaster 31a, 31b vorgesehen, mit denen bei manueller Betätigung der Steuerung signalisiert wird, den Gleichstrommotor zur Aufwärts- oder Abwärtsbewegung der oberen Teigwalze 4 anzusteuern. Die Eingangssignale werden in der Steuerung 30 gemäß einem eingegebenen Programm in Ausgangssignale A1, A2 umgesetzt, welche Relais K1, K2 nach vorgegebenen Gesetzmäßigkeiten ansteuern. Im Rahmen der Relais K1, K2 werden durch die Steuerung 30 Steuereingänge 32, 33 von Schaltgliedern 32a, 32b, 32c, 33a, 33b, 33c zum Öffnen oder Schließen des Schaltkontaktes teilweise parallel angesteuert. So wird das erste Steuerausgangssignal A1 der Steuerung 30 über das unmittelbar nachgeschaltete Relais K1 (das ebenso wie das Relais K2 vom 24-Volt-Stromkreis aus versorgt wird) den Steuereingängen 32 der Schaltglieder 32a, 32b und 32c gleichzeitig zugeführt. Das erste Schaltglied 32a verbindet das erste Anschlußelement 34a des Ankers 35 des Gleichstrommotors 21 mit dem positiven Pol des 24-Volt-Stromkreises. Das zweite Schaltglied 32b verbindet das zweite Anschlußelement 34b des Ankers 35 mit dem negativen Pol des genannten Stromkreises. Das dritte Schaltglied 32c verbindet das erste Anschlußelement 34a des Ankers 35 mit einem der beiden Anschlüsse eines Kurzschlußbügels 36. Entsprechendes gilt für die vierten, fünften und sechsten Schaltglieder 33a, 33b und 33c, wie aus Fig. 2 ersichtlich, jedoch mit der Maßgabe, daß das vierte Schaltglied 33a für das erste Anschlußelement 34a des Ankers 35 dem negativen Pol des externen Stromkreises und das fünfte Schaltglied 33b, das am zweiten Anschlußelement 34b des Ankers 35 angelegt ist, dem positiven Pol und das sechste Schaltglied 33c dem anderen Anschluß des Kurzschlußbügels 36 zugeordnet sind.

Wird von der Betätigung des Relais K1 übergegangen auf eine Betätigung des Relais K2, erfolgt demgemäß eine Umpolung des Gleichstrommotors 21 mit entsprechendem Drehrichtungswechsel. Sind beide Relais K1, K2 von der Steuerung 30 über deren Ausgänge A1, A2 nicht angesteuert, öffnen die ersten, zweiten, vierten und fünften Schaltglieder 32a, 32b, 33a, 33b, während die dritten und sechsten Schaltglieder 32c, 33c schließen und so die Anker-Anschlußelemente 34a, 34b über den Kurzschlußbügel 36 kurzschließen. Zur Herbeiführung dieses Effekts können in den Relais K1, K2 die jeweils ersten beiden Schaltglieder 32a, 32b, 33a, 33b als Schließer mit Arbeitskontakt ausgeführt sein, während die jeweils letzten Schaltglieder, die dem Kurzschlußbügel 36 zugeordnet sind, als Öffner mit Ruhekontakt realisiert sind. Daneben ist auch eine mechanische Kopplung der beiden ersten Schaltglieder 32a, 32b bzw. 33a, 33b mit den jeweils letzten Schaltgliedern 32c, 33c dergestalt denkbar, daß bei geöffnetem Zustand der jeweils ersten beiden Schaltglieder 32a, 32b bzw. 33a, 33b die letzten beiden Schaltglieder 32c, 33c stets geschlossen sind und umgekehrt.

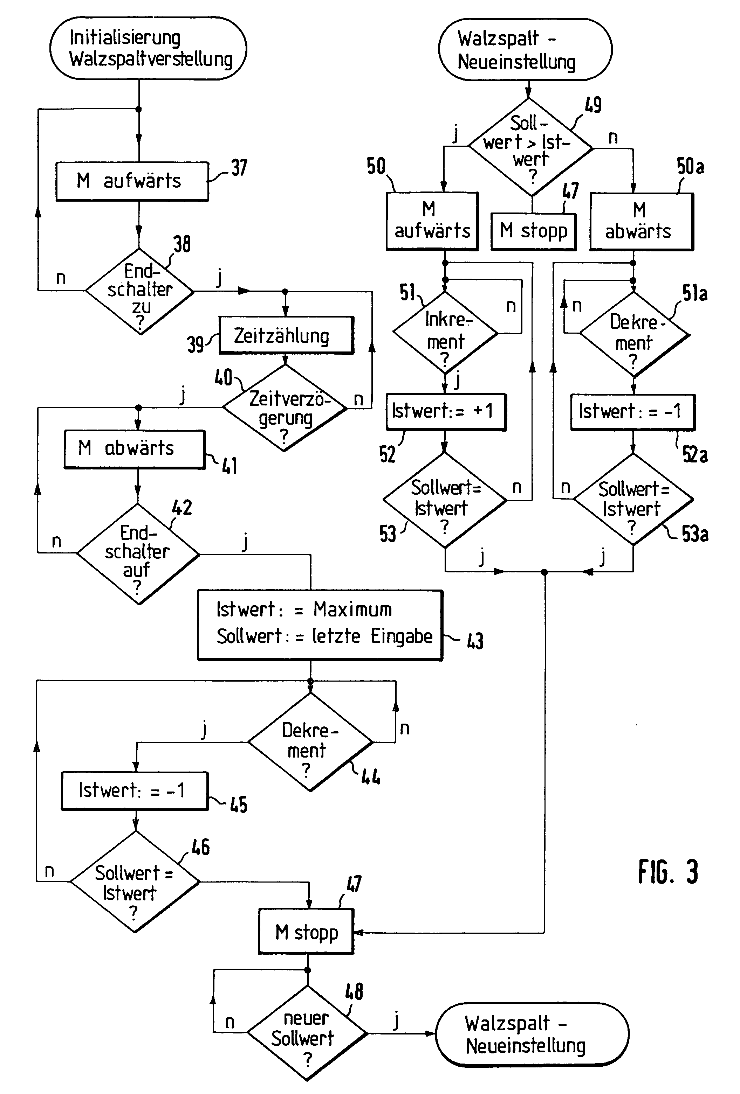

Gemäß Fig. 3 ist in der Steuerung 30 ein Programmablauf implementiert, der zunächst eine Programmroutine "Initialisierung Walzspaltverstellung" durchläuft, um den Walzspaltzähler auf einen definierten Anfangswert entsprechend einem maximalen Walzspalt einzueichen. Hierzu wird zunächst gemäß Programmschritt 37 der Gleichstrommotor 21 zur Aufwärtsfahrt angesteuert. Dazu wird gemäß Fig. 2 über den Steuerungsausgang A1 der Steuerung 30 das Relais K1 betätigt, so daß das erste und zweite Schaltglied 32a, 32b schließen und dem Gleichstrommotor 21 eine entsprechende Polung erteilen. Gleichzeitig wird das dritte Schaltglied 32c geöffnet, um einen Ankerkurzschluß zu vermeiden. Im Steuerungsprogramm wird gemäß Abfrage 38 dann ständig überprüft, ob der Endschalter 26a durch den hochgefahrenen Schaltfinger 26c betätigt worden ist. Wenn ja, wird eine Zeitschleife 39, 40 durchlaufen, damit durch weiteres Hochfahren der oberen Teigwalze 4 noch zeitlicher und räumlicher Spielraum für eine Umkehr der Bewegungsrichtung verbleibt. Nach Ablauf wird das Steuersignal A1 von der Steuerung 30 zurückgenommen und statt dessen das zweite Steuersignal A2 nebst dem nachgeschalteten Relais K2 betätigt, so daß eine Umpolung des Gleichstrommotors 21 durch Öffnen der ersten beiden Schaltglieder 32a, 32b des Relais K1 und Schließen der beiden ersten Schaltglieder 33a, 33b des zweiten Relais K2 erfolgt. Diese Steuerungsoperation ist im Programmodul 41 implementiert. Im Zuge der resultierenden Abwärtsbewegung wird im Programm die Abfrage 42 durchgeführt, ob der zuvor geschlossene Endschalter 26a durch Absenken des Schaltfingers 26c wieder geöffnet hat. Wenn ja, werden im Programmodul 43 entsprechende Speicherplätze für Ist- und Sollwerte mit einem maximalen Zählerwert für maximal großen Walzspalt und dem zuletzt eingegebenen Sollwert beschrieben. Der Sollwert kann beispielsweise über eine (nicht gezeichnete) Tastatur durch den Bediener der Steuerung 30 eingegeben werden. Nun wird in einem Abfragemodul 44 die Abtastung des Drehimpulsgebers 26 aktiviert. Wird am Eingang E1 beispielsweise ein Impuls detektiert, wird gemäß Programmschritt 45 der Istwert-Zähler dekrementiert. Ist der so gebildete Istwert gleich dem Sollwert, was in der Abfrage 46 festgestellt wird, wird gemäß Programmschritt 47 der Gleichstrommotor angehalten. Dies erfolgt steuerungstechnisch dadurch, daß die beiden Relais K1, K2 von den zugeordneten Steuerungsausgängen A1, A2 nicht angesteuert werden, so daß die jeweils letzten Schaltglieder 32c, 33c der beiden Relais K1, K2 in den Schaltzustand "geschlossen" fallen. Dabei wird der Kurzschlußbügel 36 aktiv, indem er die beiden entgegengesetzten Anschlußelemente 34a, 34b des Ankers 35 miteinander direkt verbindet. Hierdurch wird ein sofortiges Anhalten des Ankers im Gleichstrommotor 21 erreicht.

In der Programmabfrage 48 wird ständig festgestellt, ob ein neuer Sollwert eingegeben worden ist. Wenn ja, wird die Routine "Walzspalt-Neueinstellung" gestartet, die mit einer weiteren Abfrage 49 beginnt, ob der Sollwert größer oder kleiner als der momentane Istwert ist. Bei Gleichheit kann sofort wieder in den vorher erläuterten Programmodul 47 für "Motorstop" verzweigt werden. Ein Sollwert größer als der Istwert erfordert den Programmbefehl 50, wonach der Gleichstrommotor 21 zur Aufwärtsfahrt angesteuert wird. Danach wird im Rahmen einer Inkrementierschleife 51, 52, 53 so lange der Motor zur Aufwärtsfahrt angesteuert, bis eine Gleichheit von Soll- und Istwert in dem entsprechenden Register und Speicherplatz erreicht ist. Analoges 50a, 51a, 52a, 53a erfolgt bei einem Sollwert kleiner als der Istwert, jedoch mit der Maßgabe, daß der Gleichstrommotor 21 zur Abwärtsbewegung der oberen Teigwalze 4 angesteuert wird. Die Programmroutine "Initialisierung Walzspaltverstellung" wird zweckmäßig nur nach jedem Einschalten der Stromversorgung aktiviert.

Die Erfindung ist nicht auf das zeichnerisch dargestellte Ausführungsbeispiel beschränkt: So liegt es auch im Rahmen der allgemeinen erfinderischen Idee, die Spindelmutter 10 nach Fig. 1 direkt mit dem Riemen 18 des vom Elektromotor 21 angetriebenen Riementriebs zu umschlingen. Alternativ ist es denkbar, daß eine direkt mit dem Anker des Gleichstrommotors 21 verbundene Antriebswelle direkt an der Schnecke 16 angreift bzw. mit der einstückig verbunden ist, um das damit in Eingriff stehende Schneckenrad bzw. die Spindelmutter 10 in Drehung zu versetzen. Nach einer weiteren Ausbildung der Erfindung bildet die Spindelmutter 10 gleichzeitig den Läufer bzw. Anker 35 des Gleichstrommotors 21; ein solcher Hohlanker kann sich dann über sein Innengewinde auf der Außengewinde-Spindel 9 zur Walzspaltverstellung nach oben und unten entlangschrauben.

## Patentansprüche

1. Vorrichtung zur Walzspalteinstellung in Teigwalzmaschinen, wobei der Walzspalt (6) wenigstens mit einem in einer Linearführung (7,8) gelagerten Teigwalz- (4) und/oder -abrollmittel gegenüber einer sonstigen Teigauflage (2) gebildet ist, und zur Walzspaltverstellung die Teigwalze (4) in der Linearführung (7,8) über Getriebemittel (9,10,16,17,18,19) durch einen Antriebsmotor (21) verschiebbar ist, der über eine Steuerung (30) mit einem Vergleichsmodul (53,53a) zum Vergleich (46,49,53,53a) von für den Walzspalt (6) eingebbaren Sollwerten und Istwerten ansteuerbar ist, die von einem den Walzspalt (6) erfassenden Meßwertgeber abgeleitet und dem Vergleichsmodul (53,53a) in der Steuerung (30) zum Vergleich mit dem Sollwert zugeführt werden, **dadurch gekennzeichnet, daß** als Meßwertgeber ein mit der Walzspaltverstellung gekoppelter Inkremental- und/oder Dekrementalgeber (26) angeordnet ist, dessen im Zuge der Walzspaltverstellung ausgegebene Inkremente beziehungsweise Dekremente zur Bildung des Walzspalt-lstwerts in der Steuerung (30) zählbar sind (52,52a), und als Antriebsmotor ein Elektromotor (21) mit Anker (35) angeordnet ist, welcher Elektromotor (21) durch eine Kurzschlußeinrichtung (36) unmittelbar in Stillstand versetzbar ist, indem sein Anker (35) von der Steuerung (30) mittels eines oder mehrerer Schaltglieder (32c,33c) mit der Kurzschlußeinrichtung (36) unterbrechbar verbunden beziehungsweise kurzgeschlossen wird, wenn in der Steuerung (30) eine Gleichheit von Ist- und Sollwert festgestellt wird.

2. Vorrichtung nach Anspruch 1, dadurch gekennzeichnet, daß die Getriebemittel (9,10,16,17,18,19) einen Spindeltrieb (9,10) aufweisen, bei dem dessen Spindelmutter (10) vom Elektromotor (21) antreibbar ausgebildet und/oder angeordnet ist, und die in der Spindelmutter (10) kämmende Gewindespindel (9) die Teigwalze (4) trägt.

3. Vorrichtung nach Anspruch 2, dadurch gekennzeichnet, daß die Getriebemittel (9,10,16,17,18,19) ein vom Elektromotor (21) unmittelbar angetriebenes Zugmittelgetriebe, insbesondere Zahnriementrieb (17,18,19), aufweisen, das beziehungsweise der zum Drehen der Spindelmutter (10) ausgebildet und angeordnet ist.

4. Vorrichtung nach Anspruch 3, dadurch gekennzeichnet, daß die Getriebemittel (9,10,16,17,18,19) ein Schneckengetriebe (10,15,16) aufweisen, von dem das Schneckenrad als die Spindelmutter (10) und die Schnecke (16) baulich und/oder funktionell integriert mit dem Abtriebsrad (17), insbesondere der Zahnriemenscheibe, des Zugmittelgetriebes (17,18,19) ausgebildet ist.

5. Vorrichtung nach Anspruch 2, dadurch gekennzeichnet, daß der Läufer des Elektromotors mit einer koaxialen Innengewindebohrung versehen und als die auf der Gewindespindel (9) kämmende oder entlangschraubbare Spindelmutter (10) angeordnet ist.

6. Vorrichtung nach einem der vorangehenden Ansprüche, dadurch gekennzeichnet, daß der Meßwertgeber als Winkelschritt- oder Drehimpulsgeber (26) ausgeführt ist, dem in der Steuerung (30) ein Zählmodul (51,52;51a,52a) zur Weiterverarbeitung der Schritte beziehungsweise Impulse in Walzspalt-lstwerte zugeordnet ist.

7. Vorrichtung nach Ansprüche 2 und 6, dadurch gekennzeichnet, daß der Drehimpulsgeber (26) mit der Drehbewegung der Spindelmutter (10) oder gegebenenfalls der Schnecke (16) gekoppelt ist.

8. Vorrichtung nach Anspruch 7, dadurch gekennzeichnet, daß der Drehimpulsgeber (26) über ein Zugmittelgetriebe, insbesondere Zahnriementrieb (23,24,25), mit der Spindelmutter (10) oder gegebenenfalls der Schnecke (16) gekoppelt ist.

9. Vorrichtung nach einem der vorangehenden Ansprüche, dadurch gekennzeichnet, daß die Steuerung (30) wenigstens zwei Schaltausgänge (A1,A2) aufweist, mit denen Schaltglieder (K1,K2,32a-c,33a-c) oder -kontakte des Elektromotors (21) oder dessen Ankers (35) verbunden sind.

10. Vorrichtung nach einem der vorangehenden Ansprüche, dadurch gekennzeichnet, daß der Elektromotor (21) als Gleichstrommotor vorzugsweise mit Permanentmagneterregung (37) ausgeführt ist.

11. Vorrichtung nach einem der vorangehenden Ansprüche, wobei der Anker (35) wenigstens zwei für unterschiedliche Polaritäten (+,-) oder Phasen eines externen Stromkreises (24V) bestimmte Anschlußelemente (34a,34b) aufweist, die zur Umpolung des Ankers (35) zwecks Drehrichtungsumkehr (27a,27b) des Elektromotors (21) dienen können, dadurch gekennzeichnet, daß jedes Anschlußelement (34a,34b) mit wenigstens drei Schaltgliedern (32a,32b,32c;33a,33b,33c) parallel verbunden ist, die zur unterbrechbaren Verbindung des jeweiligen Anschlußelements (34a,34b) mit den unterschiedlichen Stromkreispolaritäten (+,-) oder -phasen und mit einer Kurzschlußeinrichtung (36) angeordnet sind.

12. Vorrichtung nach Anspruch 11, dadurch gekennzeichnet, daß die Schaltglieder (32a-c;33a-c) Steuereingänge (32,33) aufweisen, die mit der Steuerung (30) verbunden sind.

13. Vorrichtung nach Ansprüche 9 und 12, dadurch gekennzeichnet, daß von den dem Elektromotor (21) zugeordneten Schaltausgängen (A1,A2) des Kontrollwerks (30) je einer (A1 beziehungsweise A2) mit den Steuereingängen (32,33) der wenigstens drei Schaltglieder (32a,32b,32c beziehungsweise 33a,33b,33c) parallel verbunden ist, die den Anschlußelementen (34a,34b) für die unterschiedlichen Stromkreispolaritäten (+,-) oder -phasen und für die Kurzschlußeinrichtung (36) zugeordnet sind.

14. Vorrichtung nach einem der Ansprüche 11 bis 13, dadurch gekennzeichnet, daß von den wenigstens drei Schaltgliedern (32a-c,33a-c) die den unterschiedlichen Stromkreispolaritäten (+,-) oder -phasen zugeordneten Schaltglieder (32a,32b beziehungsweise 33a,33b) miteinander derart gekoppelt sind, daß sie stets den gleichen Schaltzustand einnehmen.

15. Vorrichtung nach einem der Ansprüche 11 bis 13, dadurch gekennzeichnet, daß von den wenigstens drei Schaltgliedern (32a-c,33a-c) die einerseits den unterschiedlichen Stromkreispolaritäten (+,-) oder -phasen zugeordneten Schaltglieder (32a,32b beziehungsweise 33a,33b) und andererseits das der Kurzschlußeinrichtung (36) zugeordnete Schaltglied (32c beziehungsweise 33c) miteinander derart gekoppelt sind, daß sie stets den komplementären oder entgegengesetzten Schaltzustand einnehmen.

16. Vorrichtung nach einem der vorangehenden Ansprüche, gekennzeichnet durch einen mit dem Elektromotor (21) oder dessen Ansteuerung verbundenen Endschalter (26a), der zur Markierung eines maximalen oder minimalen Walzspaltes (6) angeordnet und durch entsprechende Stellung der Teigwalze (4) betätigbar ist.

17. Vorrichtung nach einem der vorangehenden Ansprüche, gekennzeichnet durch einen oder mehrere mit dem Elektromotor (21) oder dessen Ansteuerung verbundene Handschalter (31a,31b), die zur manuellen Walzspaltverstellung angeordnet und angeschlossen sind.

18. Verfahren zur Walzspalteinstellung in Teigwalzmaschinen, unter Verwendung einer Walzspalt-Einstellvorrichtung, bei der der Walzspalt (6) wenigstens mit einem in einer Linearführung (7,8) gelagerten Teigwalz- (4) und/oder -abrollmittel gegenüber einer sonstigen Teigauflage (2) gebildet ist, und zur Walzspaltverstellung die Teigwalze (4) in der Linearführung (7,8) über Getriebemittel (9,10,16,17,18,19) durch einen Antriebsmotor verschiebbar ist, wobei als Antriebsmotor ein Elektromotor (21) angeordnet ist, der durch Kurzschließen seines Ankers (35) unmittelbar in Stillstand versetzbar ist, und der Antriebsmotor (21) entsprechend einem Vergleich (46,49,53,53a) von für den Walzspalt (6) eingegebenen Sollwerten und ermittelten Istwerten angesteuert wird, und unter Verwendung eines mit der Walzspaltverstellung gekoppelten Inkremental- und/oder Dekrementalgebers (26), dessen im Zuge der Walzspaltverstellung ausgegebene Inkremente beziehungsweise Dekremente zur Bildung des Walzspalt-lstwerts gezählt (52,52a) werden, wobei der Anker (35) kurzgeschlossen wird, wenn der Istwert und der Sollwert gleich sind.

19. Verfahren nach Anspruch 18, dadurch gekennzeichnet, daß nach dem Einschalten des Antriebsmotors (21) und/oder seiner Steuerung (30) der Antriebsmotor solange zur Vergrößerung oder Verkleinerung des Walzspalts (6) angesteuert wird, bis dieser eine markierte Endweite erreicht, und daß in Verbindung damit ein bestimmter Anfangszählwert für den maximalen oder minimalen Walzspalt-lstwert gesetzt (43) wird.

20. Verfahren nach Anspruch 19, dadurch gekennzeichnet, daß nach dem Setzen (43) des Anfangszählwerts der Antriebsmotor (21) zur Drehrichtungsumkehr und zur Herbeiführung eines Walzspalts (6) entsprechend dem zuletzt eingegebenen Sollwert (43) angesteuert (44-47) wird.

21. Verfahren nach einem der vorangehenden Ansprüche, dadurch gekennzeichnet, daß die Drehrichtungsumkehr nach einer Zeitverzögerung (39,40) erfolgt.

## Claims

1. Device for setting the roller gap in dough rolling machines, wherein the roller gap (6) is formed at least with a dough rolling (4) and or unrolling means mounted in a linear guide (7, 8) opposite another dough substrate (2), and in order to adjust the roller gap the dough roller (4) is displaceable in the linear guide (7, 8) via transmission means (9, 10, 16, 17, 18, 19) by a drive motor (21), which can be actuated via a control (30) with a comparison module (53, 53a) for comparing (46, 49, 53, 53a) reference values and actual values which are to be input for the roller gap (6) and which are derived by a measuring transducer determining the roller gap (6) and are fed to the comparison module (53, 53a) in the control (30) for comparison with the reference value, characterised in that as a measuring transducer an incremental and/or decremental transducer (26) coupled to the roller gap adjuster is provided, whose increments or decrements transmitted in the course of roller gap adjustment are countable (52, 52a) in the control in order to form the roller gap actual value, and as a drive motor an electric motor (21) with an armature (35) is provided, the electric motor (21) being capable of being immediately brought to standstill by a short-circuiting device (36) in that its armature (35) is interruptibly connected to the short-circuiting device (36) or short-circuited by the control (30) by means of one or more switching members (32c, 33c) if in the control (30) equality of the actual and reference value is established.

2. Device according to claim 1, characterised in that the transmission means (9, 10, 16, 17, 18, 19) have a spindle drive (9, 10), whose spindle nut (10) is formed and/or disposed drivably by the electric motor (21), and the threaded spindle (9) meshing with the spindle nut (10) carries the dough roller (4).

3. Device according to claim 2, characterised in that the transmission means (9, 10, 16, 17, 18, 19) have a traction means transmission, in particular toothed belt drive (17, 18, 19), which is driven directly by the electric motor (21) and which is formed and disposed for rotating the spindle nut (10).

4. Device according to claim 3, characterised in that the transmission means (9, 10, 16, 17, 18, 19) have a worm gear (10, 15, 16), of which the worm wheel as the spindle nut (10) and the worm (16) is formed structurally and/or operationally integrally with the drive wheel (17), in particular drive belt pulley, of the traction means transmission (17, 18, 19).

5. Device according to claim 2, characterised in that the rotor of the electric motor is provided with a coaxial female-threaded bore and is arranged as the spindle nut (10) meshing with or screwing along the threaded spindle (9).

6. Device according to one of the preceding claims, characterised in that the measuring transducer is formed as an incremental shaft encoder or angular momentum encoder (26), to which is allocated in the control (30) a counting module (51, 52; 51a, 52a) for further processing the steps or angular momentum pulses into roller gap actual values.

7. Device according to claims 2 and 6, characterised in that the angular momentum encoder (26) is coupled to the rotary motion of the spindle nut (10) or optionally the worm (16).

8. Device according to claim 7, characterised in that the angular momentum encoder (26) is coupled via a traction means transmission, in particular toothed belt drive (23, 24, 25), to the spindle nut (10) or optionally the worm (16).

9. Device according to one of the preceding claims, characterised in that the control (30) has at least two switching outputs (A1, A2), to which switching members (K1, K2, 32a-c, 33a-c) or contacts of the electric motor (21) or its armature (35) are connected.

10. Device according to one of the preceding claims, characterised in that the electric motor (21) is formed as a DC motor, preferably with permanent magnet excitation (37).

11. Device according to one of the preceding claims, wherein the armature (35) has at least two terminal elements (34a, 34b) which are intended for different polarities (+, -) or phases of an external electric circuit (24V) and which may serve for pole reversal of the armature (35) for the purpose of reversal of direction (27a, 27b) of the electric motor (21), characterised in that each terminal element (34a, 34b) is connected in parallel to at least three switching members (32a, 32b, 32c; 33a, 33b, 33c), which are arranged for interruptible connection of the respective terminal element (34a, 34b) to the different circuit polarities (+, -) or phases and to a short-circuiting device (36).

12. Device according to claim 11, characterised in that the switching members (32a-c; 33a-c) have control inputs (32, 33) which are connected to the control (30).

13. Device according to claims 9 and 12, characterised in that of the switching outputs (A1, A2) of the control (30) allocated to the electric motor (21), one (A1 or A2 respectively) is connected in parallel with each of the control inputs (32, 33) of the at least three switching members (32a, 32b, 32c and 33a, 33b, 33c respectively) which are allocated to the terminal elements (34a, 34b) for the different circuit polarities (+,-) or phases and for the short-circuiting device (36).

14. Device according to one of claims 11 to 13, characterised in that of the at least three switching members (32a-c, 33a-c) the switching members (32a, 32b and 33a, 33b respectively) associated with the different circuit polarities (+,-) or phases are so coupled together that they always adopt the same switching state.

15. Device according to one of claims 11 to 13, characterised in that of the at least three switching members (32a-c, 33a-c) on the one hand the switching members (32a, 32b and 33a, 33b respectively) associated with the different circuit polarities (+,-) or phases and on the other hand the switching member (32c or 33c) associated with the short-circuiting device (36) are so coupled together that they always adopt the complementary or opposite switching state.

16. Device according to one of the preceding claims, characterised by a limit switch (26a) which is connected to the electric motor (21) or its actuator and which is arranged to mark a maximum or minimum roller gap (6) and is actuatable by a corresponding position of the dough roller (4).

17. Device according to one of the preceding claims, characterised by one or more manual switches (31a, 31b) which are connected to the electric motor (21) or its actuator and which are arranged and connected for manual adjustment of the roller gap.

18. Method of setting the roller gap in dough rolling machines using a roller gap setting device, in which the roller gap (6) is formed at least with a dough rolling (4) and or unrolling means mounted in a linear guide (7, 8) opposite another dough substrate (2), and in order to adjust the roller gap the dough roller (4) is displaceable in the linear guide (7, 8) via transmission means (9, 10, 16, 17, 18, 19) by a drive motor (21), wherein as a drive motor an electric motor (21) is provided, which can be brought to an immediate standstill by short-circuiting of its armature (35), and the drive motor (21) is actuated according to a comparison (46, 49, 53, 53a) of input reference values and measured actual values for the roller gap (6), and using an incremental and/or decremental transducer (26) coupled to the roller gap adjuster, whose increments or decrements output in the course of roller gap adjustment are counted (52, 52a) to form the roller gap actual value, the armature (35) being short-circuited if the actual value and the reference value are equal.

19. Method according to claim 18, characterised in that after switching on of the drive motor (21) and/or its control (30) the drive motor is actuated so as to increase or reduce the roller gap (6) until this reaches a marked final breadth, and in that in combination therewith a specified starting counting value is set (43) for the maximum or minimum roller gap actual value.

20. Method according to claim 19, characterised in that after setting (43) of the starting counting value the drive motor (21) is actuated (44-47) to reverse the direction of rotation and to produce a roller gap (6) according to the last input reference value (43).

21. Method according to one of the preceding claims, characterised in that the reversal of direction is effected after a time lag (39, 40).

## Revendications

1. Dispositif de réglage de l'interstice de roulage dans des machines à rouler la pâte, l'interstice de roulage (6) étant formé au moins par un rouleau à pâte (4) et/ou un moyen de roulage de la pâte monté dans un guidage linéaire (7, 8), par rapport à un autre appui de pâte (2), et le rouleau à pâte (4), en vue du réglage de l'interstice de roulage, pouvant coulisser dans le guidage linéaire (7, 8) par l'intermédiaire de moyens de transmission (9, 10, 16,17, 18, 19), grâce à un moteur d'entraînement (21) qui peut être commandé par l'intermédiaire d'un ensemble de commande (30) comprenant un module de comparaison (53, 53a) pour la comparaison (46, 49, 53, 53a) entre des valeurs de consigne qui peuvent être prescrites pour l'interstice de roulage (6), et des valeurs réelles qui sont délivrées par un capteur de valeur de mesure relevant l'interstice de roulage (6) et qui sont transmises au module de comparaison (53, 53a) dans l'ensemble de commande (30) pour être comparées à la valeur de consigne, caractérisé en ce qu'il est prévu en tant que capteur de valeur de mesure un capteur incrémental et/ou décrémentiel (26) couplé au réglage d'interstice de roulage, et dont les incréments ou respectivement les décréments délivrés au cours du réglage de l'interstice de roulage peuvent être comptés (52, 52a) dans l'ensemble de commande (30) pour former la valeur réelle de l'interstice de roulage, et en ce qu'en guise de moteur d'entraînement, il est prévu un moteur électrique (21) à induit (35), ce moteur électrique (21) étant susceptible d'être mis à l'arrêt de manière immédiate au moyen d'un agencement de court-circuit (36) grâce au fait que son induit (35) est court-circuité ou relié de manière sectionnable avec l'agencement de court-circuit (36) par l'ensemble de commande (30), au moyen d'un ou de plusieurs organes de commutation (32c, 33c), lorsqu'une égalité entre la valeur réelle et la valeur de consigne est détectée dans l'ensemble de commande (30).

2. Dispositif selon la revendication 1, caractérisé en ce que les moyens de transmission (9, 10, 16, 17, 18, 19) comportent une transmission à vis (9, 10) dont l'écrou de vis (10) est réalisé de manière à pouvoir être entraîné par le moteur électrique (21), et la vis (9) est en prise dans l'écrou de vis (10) portant le rouleau à pâte (4).

3. Dispositif selon la revendication 2, caractérisé en ce que les moyens de transmission (9, 10, 16, 17, 18, 19) comportent une transmission à moyen de traction, notamment une transmission à courroie crantée (17, 18, 19), qui est entraînée directement par le moteur électrique (21) et qui est réalisée et disposée de manière à faire tourner l'écrou de vis (10).

4. Dispositif selon la revendication 3, caractérisé en ce que les moyens de transmission (9, 10, 16, 17, 18, 19) comportent une transmission à vis sans fin (10, 15, 16), la vis sans fin (16) étant réalisée sous forme intégrée, sur le plan de la construction et/ou sur le plan fonctionnel, à la roue de sortie (17), notamment la poulie de courroie crantée, de la transmission à moyen de traction (17, 18, 19).

5. Dispositif selon la revendication 2, caractérisé en ce que le rotor du moteur électrique est pourvu d'un alésage à filetage intérieur, coaxial, et se présente comme étant l'écrou de vis (10) en prise avec la vis (9) ou pouvant être vissé le long de celle-ci.

6. Dispositif selon l'une des revendications précédentes, caractérisé en ce que le capteur de valeur de mesure est réalisé sous forme de capteur de pas angulaires ou capteur d'impulsions de rotation (26), auquel est associé dans l'ensemble de commande (30), un module de comptage (51, 52; 5 la, 52a) pour la transformation des pas ou impulsions en valeurs réelles d'interstice de roulage.

7. Dispositif selon les revendications 2 et 6, caractérisé en ce que le capteur d'impulsions de rotation (26) est couplé au mouvement de rotation de l'écrou de vis (10) ou, le cas échéant, de la vis sans fin (16).

8. Dispositif selon la revendication 7, caractérisé en ce que le capteur d'impulsions de rotation (26) est couplé à l'écrou de vis (10) ou, le cas échéant, à la vis sans fin (16), par l'intermédiaire d'une transmission à moyen de traction, notamment une transmission à courroie crantée (23, 24, 25).

9. Dispositif selon l'une des revendications précédentes, caractérisé en ce que l'ensemble de commande (30) comporte au moins deux sorties de commutation (A1, A2) auxquelles sont reliés des organes de commutation (K1, K2, 32a-c, 33a-c) ou de contact du moteur électrique (21) ou de son induit (35).

10. Dispositif selon l'une des revendications précédentes, caractérisé en ce que le moteur électrique (21) est réalisé sous forme de moteur à courant continu, de préférence à excitation par aimant permanent (37).

11. Dispositif selon l'une des revendications précédentes, l'induit (35) comportant au moins deux éléments de connexion (34a, 34b) destinés à des polarités (+,-) ou des phases différentes d'un circuit de courant externe (24V), qui peuvent servir à l'inversion de polarité de l'induit (35) dans le but d'une inversion du sens de rotation (27a, 27b) du moteur électrique (21), caractérisé en ce que chaque élément de connexion (34a, 34b) est relié en parallèle à au moins trois organes de commutation (32a, 32b, 32c; 33a, 33b, 33c), qui sont montés de façon à réaliser une liaison sectionnable de l'élément de connexion respectif (34a, 34b) avec les polarités (+, -) ou les phases différentes du circuit de courant et avec l'agencement de court-circuit (36).

12. Dispositif selon la revendication 11, caractérisé en ce que les organes de commutation (32a-c; 33a-c) comportent des entrées de commande (32, 33) qui sont reliées à l'ensemble de commande (30).

13. Dispositif selon les revendications 9 et 12, caractérisé en ce que l'une à chaque fois (A1 respectivement A2) des sorties de commutation (A1, A2) de l'ensemble de commande (30), associées au moteur électrique (21), est reliée en parallèle aux entrées de commande (32, 33) desdits au moins trois organes de commutation (32a, 32b, 32c respectivement 33a, 33b, 33c) qui sont associés aux éléments de connexion (34a, 34b) pour les polarités (+, -) ou les phases différentes du circuit de courant et pour l'agencement de court-circuit (36).

14. Dispositif selon l'une des revendications 11 à 13, caractérisé en ce que ceux desdits au moins trois organes de commutation (32a-c, 33a-c), à savoir les organes de commutation (32a, 32b respectivement 33a, 33b) qui sont associés aux polarités (+,-) ou aux phases différentes du circuit de courant, sont couplés entre-eux de manière à ce qu'ils prennent toujours le même état de commutation.

15. Dispositif selon l'une des revendications 11 à 13, caractérisé en ce que ceux desdits au moins trois organes de commutation (32a-c, 33a-c), à savoir d'une part les organes de commutation (32a, 32b respectivement 33a, 33b) qui sont associés aux polarités (+,-) ou aux phases différentes du circuit de courant, et d'autre part l'organe de commutation (32c respectivement 33c) associé à l'agencement de court-circuit (36), sont couplés entre-eux de manière à ce qu'ils prennent toujours l'état de commutation complémentaire ou opposé.

16. Dispositif selon l'une des revendications précédentes, caractérisé par un commutateur de fin de course (26a) relié au moteur électrique (21) ou à sa commande, qui est disposé de façon à marquer un interstice de roulage (6) maximal ou minimal, et peut être actionné par la position correspondante du rouleau à pâte (4).

17. Dispositif selon l'une des revendications précédentes, caractérisé par un ou plusieurs commutateurs à main (31a, 31b) reliés au moteur électrique (21) ou à sa commande, qui sont prévus et raccordés en vue d'un réglage manuel de l'interstice de roulage.

18. Procédé de réglage de l'interstice de roulage dans des machines à rouler la pâte, utilisant un dispositif de réglage de l'interstice de roulage, dans lequel l'interstice de roulage (6) est formé au moins par un rouleau à pâte (4) et/ou un moyen de roulage de la pâte monté dans un guidage linéaire (7, 8) par rapport à un autre appui de pâte (2), et le rouleau à pâte (4), en vue du réglage de l'interstice de roulage, peut coulisser dans le guidage linéaire (7, 8) par l'intermédiaire de moyens de transmission (9, 10, 16,17, 18, 19), grâce à un moteur d'entraînement pour lequel est prévu un moteur électrique (21) susceptible d'être mis à l'arrêt de manière immédiate par la mise en court-circuit de son induit (35), et le moteur d'entraînement (21) étant commandé conformément à une comparaison (46, 49, 53, 53a) de valeurs de consigne prescrites et de valeurs réelles déterminées pour l'interstice de roulage, le procédé utilisant également un capteur incrémental et/ou décrémentiel (26) couplé au réglage de l'interstice de roulage, et dont les incréments ou respectivement les décréments délivrés au cours du réglage de l'interstice de roulage sont comptés (52, 52a) pour former la valeur réelle de l'interstice de roulage, l'induit (35) étant mis en court-circuit lorsque la valeur réelle et la valeur de consigne sont identiques.

19. Procédé selon la revendication 18, caractérisé en ce qu'après la mise en marche du moteur d'entraînement (21) et/ou de son ensemble de commande (30), le moteur d'entraînement est commandé pour l'augmentation ou la diminution de l'interstice de roulage (6) jusqu'à ce que cet interstice de roulage atteigne une largeur extrême marquée, et en ce qu'en liaison avec cela, on fixe (43) une valeur de comptage initiale déterminée, pour la valeur réelle maximale ou minimale de l'interstice de roulage.

20. Procédé selon la revendication 19, caractérisé en ce qu'après avoir fixé (43) la valeur initiale de comptage, on commande (44-47) le moteur d'entraînement (21) pour l'inversion de son sens de rotation et pour la réalisation d'un interstice de roulage (6) correspondant à la valeur de consigne introduite en dernier lieu (43).

21. Procédé selon l'une des revendications précédentes, caractérisé en ce que l'inversion du sens de rotation est effectuée avec un retard dans le temps (temporisation) (39, 40).
